# EUROPÄISCHE PATENTSCHRIFT

(11) **EP 0 962 848 B1**
(45) Veröffentlichungstag und Bekanntmachung des Hinweises auf die Patenterteilung: **26.05.2004**
(21) Anmeldenummer: 99108825.3
(22) Anmeldetag: 04.05.1999
(51) Int. Cl.: G05D 16/10, A62B 9/02

(54) **Vorrichtung zur Druckminderung**
Pressure reducer
Réducteur de pression

(30) Priorität: 06.06.1998 DE 19825460
(43) Veröffentlichungstag der Anmeldung: 08.12.1999
(73) Patentinhaber: Weinmann Geräte für Medizin GmbH & Co. KG, 22525 Hamburg (DE)
(72) Erfinder: Griefahn, Joachim Dr., 22523 Hamburg (DE); Döring, Tilmann, 22459 Hamburg (DE)
(74) Vertreter: Klickow, Hans-Henning, Dr.-Ing.

(56) Entgegenhaltungen:
- EP-A- 0 112 765
- EP-A- 0 903 533
- US-A- 3 211 175
- US-A- 3 818 921
- US-A- 5 662 100

## Beschreibung

Die Erfindung betrifft eine Vorrichtung zur Druckminderung für strömende gasförmige Medien, die mindestens einen Gaseinlaß sowie mindestens einen Gasauslaß aufweist und bei der innerhalb eines Strömungskanals ein Kolben angeordnet ist, der von einer Feder mit einer Spannkraft belastet ist, die den Kolben von einer Grundfläche wegdrückt, in deren Bereich eine vom Kolben verschließbare Durchströmungsöffnung angeordnet ist und bei der der Kolben eine Einwirkungsfläche aufweist, die von dem druckgeminderten Medium beaufschlagbar ist und die einer Andruckfläche für die Feder abgewandt angeordnet ist, sowie bei der der Kolben von einer zweiten Feder beaufschlagt ist, die mit einem Einstellelement versehen ist, das eine Vorspannung zwischen der zweiten Feder und dem Kolben vorgibt

Derartige Vorrichtungen werden üblicherweise als Kolbendruckminderer bezeichnet und können in vielfältigen Anwendungsbereichen eingesetzt werden. Typische Anwendungsfelder liegen im Bereich von Beatmungsgeräten sowie bei Gasflaschen von Schweißgeräten. Eine typische Anordnung ist in der US-PS 5 662 100 beschrieben.

Die typische Funktionsweise besteht darin, daß durch die Durchströmungsöffnung hindurch das gasförmige Medium bis in den Bereich der Einwirkungsfläche des Kolbens geführt wird und hier eine Kraft erzeugt, die der Kraftwirkung der Feder entgegengesetzt ist. Die Feder drückt zunächst den Kolben von der Durchströmungsöffnung weg, so daß ein relativ großer Gasdurchtritt mit entsprechendem hohen Druckaufbau im Bereich der Einwirkungsfläche ermöglicht wird. Dieser Druck erzeugt jedoch aufgrund der relativ großen Dimensionierung der Einwirkungsfläche einen Gegendruck, der zu einer Annäherung des Kolbens an die Durchströmungsöffnung führt. In Abhängigkeit von der Dimensionierung der Federkraft sowie der Größe der Einwirkungsfläche kann ein Kräftegleichgewicht derart vorgegeben werden, daß ein vorwählbarer geminderter Druck erreicht wird. Das jeweilige Strömungsvolumen ergibt sich zwangsläufig aufgrund der gewählten Bauelementdimensionierung und ist nicht ohne konstruktive Änderungen variabel. Bei einer einmal gewählten konstruktiven Realisierung ist der volumenstrom nicht mehr veränderlich.

Aus der US-A-3,211,157 ist bereits ein Ventil zur Druckregelung bekannt, bei dem eine erste und eine zweite Feder relativ zueinander koaxial angeordnet sind und einen Kolben zur Druckminderung beaufschlagen. Die äußere größere Feder wirkt ständig auf den Kolben ein. Die innere kleinere Feder verspannt den Kolben in einem begrenzten verstellbereich relativ zu einem Einstellelement. Die innere Feder stellt eine zusätzliche Federkraft in einem geschlossenen Zustand des Ventils und in einem ersten Arbeitsbereich bereit. Mit Hilfe der inneren Feder wird eine zusätzliche Kraft erzeugt, die eine vollständig geschlossene Positionierung des Kolbens in einer geschlossenen Stellung des Druckreglers gewährleistet.

Aus der EP-A-0 112 765 ist eine kombinierte Bauweise eines Druckminderers sowie eines Abschaltventils bekannt. Ein Kolben zur Druckregelung wird von der jeweiligen Druckkraft entgegen der vorspannkraft einer Feder positioniert.

In der US-A-3,818,921 wird die Anordnung von zwei relativ zueinander koaxial angeordneten Federn beschrieben, die gleichzeitig auf einen Ventilkolben einwirken. Es ist lediglich eine gemeinsame Beaufschlagung beider Federn vorgesehen.

In der EP-A-0 903 533 wird ebenfalls ein Ventil zur Druckminderung beschrieben, bei dem auf einen Positionierkolben zwei Federn einwirken. Die Federn sind relativ zu einer Bewegungsrichtung in Reihe hintereinander angeordnet. Eine Beaufschlagung der Federn sowie eine Kraftentfaltung der Federn ist somit jeweils nur gemeinsam möglich.

Aufgabe der vorliegenden Erfindung ist es, eine Vorrichtung der einleitend genannten Art derart zu konstruieren, daß zusätzlich zur Vorgabe eines ausgangsseitigen Druckes auch der Volumenstrom einstellbar ist.

Diese Aufgabe wird erfindungsgemäß dadurch gelöst, daß sich ein Mittelteil zur Beaufschlagung der zweiten Feder im wesentlichen entlang einer Längsachse der ersten Feder erstreckt und daß die zweite Feder relativ zur ersten Feder derart angeordnet ist, daß die zweite Feder einer auf den Kolben einwirkenden Vorspannkraft der ersten Feder einer Korrekturkraft zur definierten Vorgabe eines Gleichgewichtspunktes des Druckreglers überlagert.

Mit Hilfe der zweiten Feder ist es möglich, der Vorspannkraft der ersten Feder eine Korrekturkomponente zu überlagern, die die Vorspannkraft der ersten Feder erhöht oder erniedrigt. Hierdurch wird der Gleichgewichtspunkt des Druckreglers derart verschoben, daß der gewünschte Druck bei unterschiedlichen Strömungsvolumina erreicht werden kann. Es wird somit eine vorrichtung bereitgestellt, mit der unabhängig voneinander der Ausgangsdruck sowie das Strömungsvolumen beim gewünschten Druck vorgegeben werden können.

Ein typisches Anwendungsgebiet wird dadurch erschlossen, daß eine Verwendung im Bereich eines Beatmungsgerätes vorgesehen ist.

Insbesondere ist daran gedacht, daß eine verwendung im Bereich eines Gerätes zur Durchführung einer Sauerstofftherapie vorgesehen ist. Eine derartige Sauerstofftherapie kommt häufig bei Erkrankungen der Atemwege sowie des Herz-Kreislauf-Systems zur Anwendung. Ebenfalls werden Geräte zur Durchführung einer derartigen Therapie als Notfallreserve in einer Vielzahl medizinischer Institutionen, beispielsweise Krankenhäusern, Pflegeheimen und Altenheimen verwendet.

Eine äußerst raumsparende Konstruktion kann dadurch bereitgestellt werden, daß die erste Feder und die zweite Feder koaxial zueinander angeordnet sind.

Zur Unterstützung der Bereitstellung einer Feinregelung wird vorgeschlagen, daß die zweite Feder eine kleinere Federkonstante als die erste Feder aufweist. Die betreffende Feinregelung ist insbesondere dann vorteilhaft, wenn die Geräte bei unterschiedlichen Patienten eingesetzt werden. In Abhängigkeit von den individuellen Anforderungen kann hierdurch das gesamte Spektrum der therapeutisch sinnvollen Dosierungen optimal abgedeckt werden. Bei einer Anwendung im Zusammenhang mit der Sauerstoffversorgung von Patienten ist es insbesondere möglich, die intraindividuellen Schwankungen zu berücksichtigen, die dadurch hervorgerufen werden, daß die therapeutisch erforderliche Dosis von den jeweils vorliegenden unterschiedlichen körperlichen Belastungen abhängig ist. Insbesondere ist es auch möglich, den Schlaf-Wach-Rhythmus bei der Festlegung der Dosierung zu berücksichtigen.

Ein jeweiliger Arbeitspunkt kann dadurch eingestellt werden, daß die zweite Feder mit einer Einstellvorrichtung zur Vorgabe einer Vorspannkraft verbunden ist.

Zur weiteren Unterstützung einer kompakten Ausführungsform ist vorgesehen, daß die zweite Feder in einem Innenraum des Kolbens angeordnet ist.

Eine einfache Bedienbarkeit wird dadurch bereitgestellt, daß das Einstellelement eine manuell betätigbare Kappe aufweist.

Ein günstiger Kraftlinienverlauf im Gehäusebereich wird dadurch unterstützt, daß sich ein Mittelteil zur Beaufschlagung der zweiten Feder im wesentlichen entlang einer Längsachse der ersten Feder erstreckt.

Eine geometrisch kurze Bauform läßt sich dadurch unterstützen, daß der Kolben von der ersten Feder und der zweiten Feder mit Kraftentfaltungen in einander entgegengesetzter Richtungen beaufschlagt ist.

In der Zeichnung sind Ausführungsbeispiele der Erfindung schematisch dargestellt. Es zeigen:
- Figur 1:: einen Querschnitt durch die Vorrichtung,
- Figur 2:: eine Darstellung der Vorrichtung gemäß Blickrichtung II in Figur 1,
- Figur 3:: eine vergrößerte Darstellung der Einzelheit III in Figur 1,
- Figur 4:: eine vergrößerte Darstellung der Einzelheit IV in Figur 1,
- Figur 5:: eine vergrößerte Darstellung der Einzelheit V in Figur 1, und
- Figur 6:: eine vergrößerte Darstellung der Einzelheit VI in Figur 2.

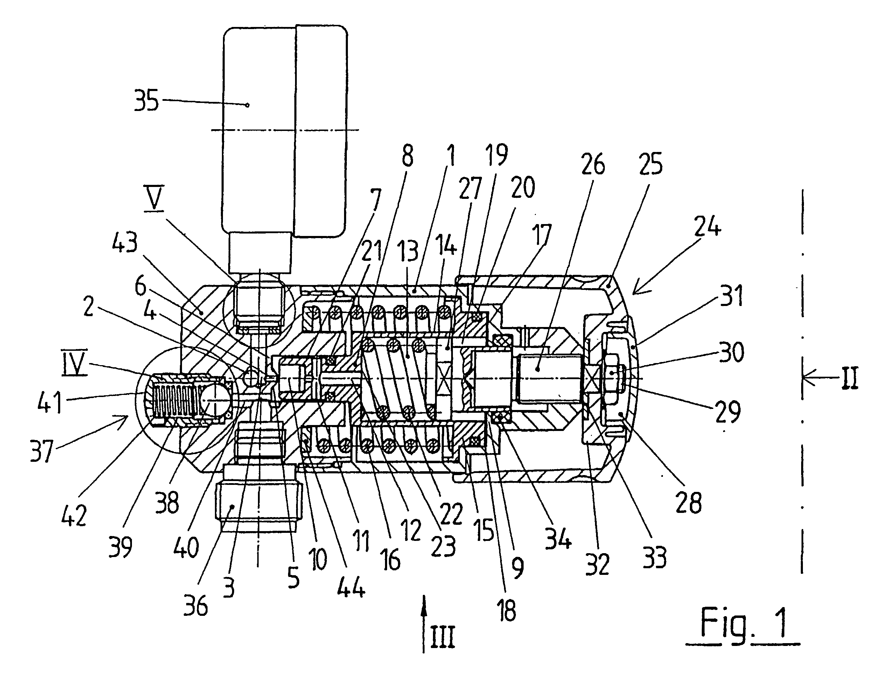

Gemäß der Ausführungsform in Figur 1 ist vorgesehen, daß ein Gehäuse (1) einen Einlaß (2) aufweist, in den das gasförmige Medium eintreten kann. Über innere Verbindungskanäle (3) gelangt das eingespeiste gasförmige Medium, das typischerweise einen Einspeisungsdruck von etwa 200 bar aufweisen kann, in den Bereich einer Durchströmungsöffnung (4). Die Durchströmungsöffnung (4) ist typischerweise im Bereich einer kegelförmigen Erhebung (5) einer Grundfläche (6) angeordnet, die bereichsweise einen Strömungskanal (7) begrenzt. Innerhalb des Strömungskanals (7) ist ein Kolben (8) angeordnet, der in Richtung einer Längsachse (9) verschieblich im Strömungskanal (7) geführt ist. Im Bereich seiner der Durchströmungsöffnung (4) zugewandten Ausdehnung weist der Kolben (8) ein Abdichtelement (10) auf, das beispielsweise als ein Block aus Kunststoff ausgeführt sein kann, der in den Kolben (8) eingelassen ist.

Der Kolben (8) weist einen etwas geringeren Außendurchmesser auf, als ein Innendurchmesser des Strömungskanals (7) beträgt. Hierdurch wird zwischen dem Kolben (8) und der Wandung des Strömungskanals (7) ein Ringkanal bereitgestellt. Grundsätzlich ist es ebenfalls denkbar, den Kolben (8) mit einer an den Innendurchmesser des Strömungskanals (7) angepaßten Dimensionierung zu versehen und im Bereich des Kolbens (8) Kanäle vorzusehen, die sich in Richtung der Längsachse (9) erstrecken. Diese Kanäle können beispielsweise als Außenprofilierung des Kolbens (8) ausgebildet sein.

Aufgrund der erläuterten Dimensionierung des Kolbens (8) wird ein.Strömungsdurchgang zu einem Querkanal (11) bereitgestellt, der seinerseits in einen Mittelkanal (12) einmündet, der sich im wesentlichen entlang der Längsachse (9) durch den Kolben (8) hindurch erstreckt. Der Mittelkanal (12) mündet im Bereich seiner dem Querkanal (11) abgewandten Ausdehnung in einen Innenraum (13) des Kolbens (8) ein. Der Innenraum (13) ist von einer Kolbenwandung (14) begrenzt, die im Bereich ihrer dem Mittelkanal (12) abgewandten Ausdehnung in einen seitlich überstehenden Ringflansch einmündet. Der Ringflansch (15) wird von einer Feder (16) beaufschlagt, die sich im Bereich ihres dem Ringflansch (15) abgewandten Endes am Gehäuse (1) abstützt. Eine Mittelachse der Feder (16) fällt im wesentlichen mit der Längsachse (9) des Kolbens (8) zusammen. Die Feder (16) umgibt dabei spiralförmig den Kolben (8).

Der Ringflansch (15) ist in Richtung der Längsachse (9) translatorisch beweglich im Gehäuse (1) geführt. Der Ringflansch (15) weist im Bereich seiner der Feder (16) abgewandten Begrenzung eine Einwirkungsfläche (17) auf, die gemeinsam mit dem Gehäuse (1) einen Gegendruckraum (18) begrenzt, der über einen Kanal (19) mit dem Innenraum (13) verbunden ist. Der Ringflansch (15) ist von einer Dichtung (20) gegenüber dem Gehäuse (1) abgedichtet. Ebenfalls ist der Kolben (8) innerhalb des Strömungskanals (7) von einer Dichtung (21) gegenüber dem Gehäuse (1) abgedichtet. Die Dichtungen (20, 21) können beispielweise als O-Ringe ausgeführt sein.

Innerhalb des Innenraumes (13) ist eine zweite Feder (22) angeordnet, die den Kolben (8) im Bereich einer Basisfläche (23) des Innenraumes (13) beaufschlagt. Die Basisfläche (23) umgibt die Einmündung des Mittelkanals (12) in den Innenraum (13). Im Bereich ihrer der Basisfläche (23) abgewandten Ausdehnung ist die zweite Feder (22) von einem Einstellelement (24) beaufschlagt. Gemäß der Ausführungsform in Figur 1 besteht das Einstellelement (24) aus einer Kappe (25), die mit einem Innengewinde auf einem Außengewinde des Gehäuses (1) geführt ist. Die Kappe (25) wirkt über ein Mittelteil (26) auf ein Konterelement (27), das die zweite Feder (22) beaufschlagt. Das Konterelement (27) kann als eine Scheibe mit einem Mitteldurchlaß ausgebildet sein.

Die Kappe (25) ist mit einer Mulde (28) versehen, in die das Mittelteil (26) mit einem Schaft (29) hineinragt. Der Schaft (29) weist ein Außengewinde auf, das von einer Mutter (30) beaufschlagt wird. Über eine Verstellung der Mutter (30) kann eine Vorspannung für die zweite Feder (22) definiert werden. Die Mulde (28) ist von einem Verkleidungsdeckel (31) verschlossen.

Zur Entlastung der Kappe (25) von Biegekräften ist in einen Boden (32) der Mulde (28) ein Verstärkungselement (33) eingelassen, das beispielsweise ähnlich zu einer Unterlegscheibe ausgebildet sein kann. Das Gehäuse (1) bildet eine das Mittelteil (26) umgebende Führung aus, relativ zu der das Mittelteil (26) in einer Umgebung des Gegendruckraumes (18) von einer Dichtung (34) abgedichtet ist. Die Dichtung (34) kann als ein O-Ring ausgeführt sein.

Der im Bereich des Einlasses (2) anstehende Druck wird von einem Eingangsmanometer (35) angezeigt. Der wesentliche Anteil des durch die Strömungsöffnung (4) hindurchtretenden druckgeminderten Mediums wird zum Auslaß (36) geleitet. Eine Druckbegrenzung erfolgt über ein Überdruckventil (37), das eine Kugel (38) aufweist, die von einer Feder (39) gegen eine Überströmöffnung (40) des Auslasses (36) gedrückt wird. Eine Vorspannung der Feder (39) ist von einer Federkappe (41) vorgebbar. Die Federkappe (41) ist mit einer Ausströmöffnung (42) versehen, um eine Ableitung des gegebenenfalls austretenden gasförmigen Mediums zu ermöglichen.

Zur weiteren Erhöhung der Stabilität ist vorgesehen, das Gehäuse (1) im Bereich der diversen vorgesehenen Strömungskanäle mit einem Gehäuseblock (43) zu versehen und im Bereich einer Einwirkung der Feder (16) auf den Gehäuseblock (43) ein zusätzliches Verstärkungselement (44) anzuordnen.

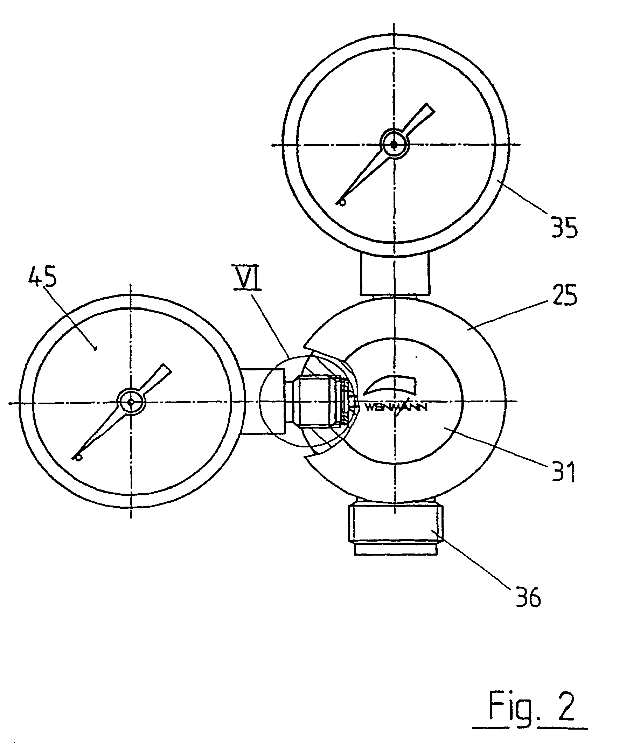

Aus der Darstellung in Figur 2 ist erkennbar, daß zusätzlich zum Eingangsmanometer (35) ein Ausgangsmanometer (45) vorgesehen ist, das den reduzierten Druck anzeigt. Typischerweise sind die Manometer (35, 45) relativ zueinander mit Längsachsen angeordnet, die näherungsweise einen rechten Winkel begrenzen.

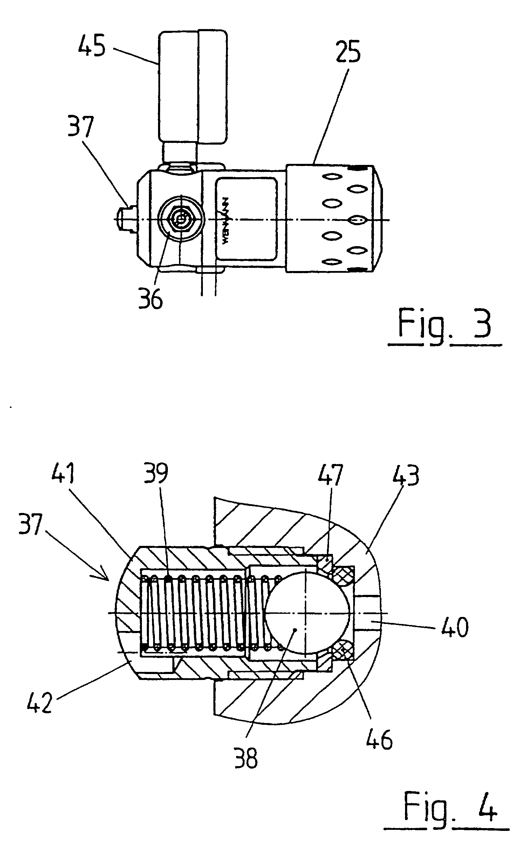

Aus der Darstellung in Figur 3 ist ebenfalls noch einmal erkennbar, daß auch die sich durch die Kappe (25) hindurch erstreckende Längsachse (9) sowie eine Längsachse des Ausgangsmanometer (45) näherungsweise einen rechten Winkel begrenzen. Das Überdruckventil (37) ragt in eine der Kappe (35) abgewandte Richtung und somit von einem Bediener weg.

Der Detailaufbau des Überdruckventils (37) ist noch einmal in Figur 4 veranschaulicht. Es ist insbesondere erkennbar, daß die Kugel (38) nicht unmittelbar gegen die Überströmöffnung (40) grenzt, sondern daß die Überströmöffnung (40) umgebend eine ringförmige Dichtung (46) angeordnet ist. Hierdurch kann auch bei Auftreten von Fertigungstoleranzen eine hohe Dichtwirkung gewährleistet werden. Zur Kammerung der Dichtung (46) ist zwischen der Federkappe (41) und der Dichtung (46) eine Andruckscheibe (47) angeordnet.

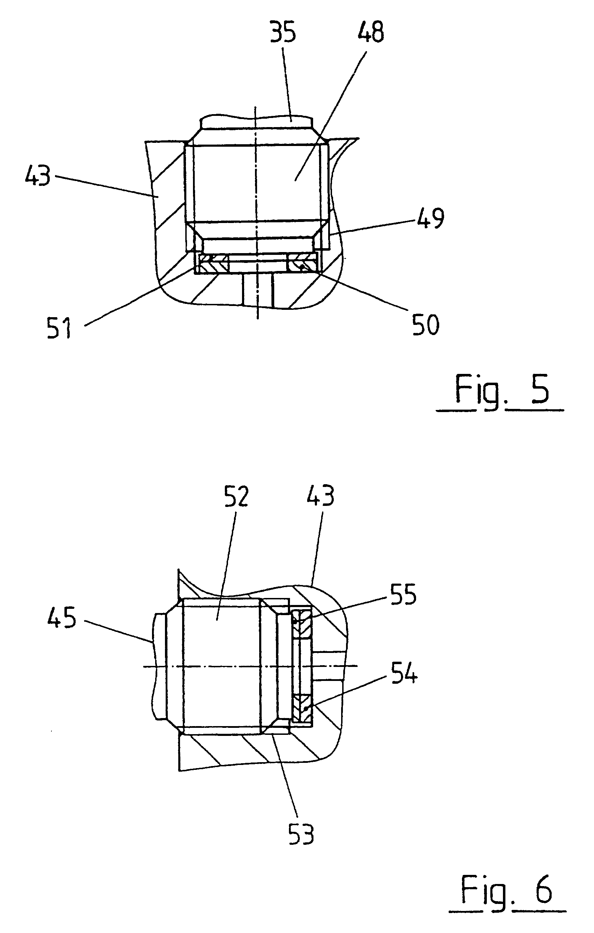

Aus Figur 5 ist erkennbar, daß das Eingangsmanometer (35) mit einem Schaft (48) in eine Bohrung (49) des Gehäuseblockes (43) eingeschraubt ist. Zur Gewährleistung der erforderlichen Abdichtung sind ein Dichtelement (50) sowie eine Andruckscheibe (51) verwendet.

Eine vergleichbare Anordnung zeigt Figur 6 auch für die Montage des Ausgangsmanometers (45). Hier ist das Ausgangsmanometer (45) mit einem Schaft (52) in eine Bohrung (53) des Gehäuseblocks (43) eingesetzt. Zur Abdichtung sind wiederum ein Dichtelement (54) sowie eine Andruckscheibe (55) verwendet.

## Patentansprüche

1. Vorrichtung zur Druckminderung für strömende gasförmige Medien, die mindestens einen Gaseinlaß (2) sowie mindestens einen Gasauslaß (36) aufweist und bei der innerhalb eines Strömungskanals (7) ein Kolben (8) angeordnet ist, der von einer Feder (16) mit einer Spannkraft belastet ist, die den Kolben (8) von einer Grundfläche (6) wegdrückt, in deren Bereich eine vom Kolben (8) verschließbare Durchströmungsöffnung (4) angeordnet ist und bei der der Kolben (8) eine Einwirkungsfläche aufweist, die von dem druckgeminderten Medium beaufschlagbar ist und die einer Andruckfläche für die Feder abgewandt angeordnet ist, sowie bei der der Kolben (8) von einer zweiten Feder (16) beaufschlagt ist, die mit einem Einstellelement (24) versehen ist, das eine Vorspannung zwischen der zweiten Feder (22) und dem Kolben (8) vorgibt, **dadurch gekennzeichnet, daß** sich ein Mittelteil (26) zur Beaufschlagung der zweiten Feder (22) im wesentlichen entlang einer Längsachse (9) der ersten Feder (16) erstreckt und daß die zweite Feder (22) relativ zur ersten Feder (16) derart angeordnet ist, daß die zweite Feder (22) einer auf den Kolben (8) einwirkenden Vorspannkraft der ersten Feder (16) eine Korrekturkraft zur definierten Vorgabe eines Gleichgewichtspunktes des Druckreglers überlagert.

2. Vorrichtung nach Anspruch 1, **dadurch gekennzeichnet, daß** eine Verwendung im Bereich eines Beatmungsgerätes vorgesehen ist.

3. Vorrichtung nach Anspruch 1 oder 2, **dadurch gekennzeichnet, daß** eine Verwendung im Bereich eines Gerätes zur Durchführung einer Sauerstofftherapie vorgesehen ist.

4. Vorrichtung nach einem der Ansprüche 1 bis 3, **dadurch gekennzeichnet, daß** die erste Feder (16) und die zweite Feder (22) koaxial zueinander angeordnet sind.

5. Vorrichtung nach einem der Ansprüche 1 bis 4, **dadurch gekennzeichnet, daß** die zweite Feder (22) eine kleinere Federkonstante als die erste Feder (16) aufweist.

6. Vorrichtung nach einem der Ansprüche 1 bis 5, **dadurch gekennzeichnet, daß** die zweite Feder (22) mit einer Einstellvorrichtung zur Vorgabe einer VorSpannkraft verbunden ist.

7. Vorrichtung nach einem der Ansprüche 1 bis 6, **dadurch gekennzeichnet, daß** die zweite Feder (22) in einem Innenraum (13) des Kolbens (8) angeordnet ist.

8. Vorrichtung nach einem der Ansprüche 1 bis 7, **dadurch gekennzeichnet, daß** das Einstellelement (24) eine manuell betätigbare Kappe (25) aufweist.

9. Vorrichtung nach einem der Ansprüche 1 bis 8, **dadurch gekennzeichnet, daß** der Kolben (8) von der ersten Feder (16) und der zweiten Feder (22) mit Kraftentfaltungen in einander entgegengesetzte Richtungen beaufschlagt ist.

## Claims

1. A device for pressure reduction for flowing gaseous media, which comprises at least one gas inlet (2) and at least one gas outlet (36) and in which a piston (8) is arranged inside a flow channel (7), which piston (8) is loaded by a spring (16) with a tension force which forces the piston (8) away from a base surface (6), in the area of which there is arranged a through-flow opening (4) closable by the piston (8) and in which the piston (8) comprises an operative face which may be acted upon by the pressure-reduced medium and which is arranged remotely from a contact face for the spring, and in which the piston (8) is acted upon by a second spring (22), which is provided with an adjusting element (24), which sets a pretension between the second spring (22) and the piston (8), **characterised in that** a central portion (26) for acting on the second spring (22) extends substantially along a longitudinal axis (9) of the first spring (16) and **in that** the second spring (22) is arranged relative to the first spring (16) in such a way that the second spring (22) superimposes a corrective force on a pretension force of the first spring (16) acting on the piston (8) for defined setting of a point of equilibrium of the pressure regulator.

2. A device according to claim 1, **characterised in that** use is provided in connection with a respirator.

3. A device according to claim 1 or claim 2, **characterised in that** use is provided in connection with an apparatus for performing oxygen therapy.

4. A device according to one of claims 1 to 3, **characterised in that** the first spring (16) and the second spring (22) are arranged coaxially to one another.

5. A device according to one of claims 1 to 4, **characterised in that** the second spring (22) exhibits a smaller spring constant than the first spring (16).

6. A device according to one of claims 1 to 5, **characterised in that** the second spring (22) is connected to an adjusting device for setting a pretension force.

7. A device according to one of claims 1 to 6, **characterised in that** the second spring (22) is arranged in an inner chamber (13) of the piston (8).

8. A device according to one of claims 1 to 7, **characterised in that** the adjusting element (24) comprises a manually actuatable cap (25).

9. A device according to one of claims 1 to 8, **characterised in that** the piston (8) is acted on by the first spring (16) and the second spring (22) with force development in mutually opposing directions.

## Revendications

1. Dispositif servant à la réduction de la pression dans des flux de milieux gazeux, dispositif qui comporte au moins une entrée pour le gaz (2), ainsi qu'au moins une sortie pour le gaz (36), et pour lequel se trouve, aménagé à l'intérieur d'un canal d'écoulement (7), un piston (8) qui est chargé au moyen d'un ressort (16), par une force élastique qui pousse le piston (8) en l'éloignant de la surface de la base (6) dans l'aire de laquelle est disposée une ouverture de passage du flux (4) pouvant être obturée par le piston (8), et pour lequel le piston (8) est pourvu d'une surface active qui peut être soumise à la charge du milieu à pression diminuée, et qui est aménagée à l'opposé d'une surface d'appui pour le ressort, ainsi que pour lequel le piston (8) est soumis à la charge d'un deuxième ressort (16) qui est pourvu d'un élément de réglage (24) qui établit au préalable une tension initiale entre le deuxième ressort (22) et le piston (8), **caractérisé en ce qu'**une partie médiane (26) pour la mise en charge du deuxième ressort (22) s'étend essentiellement le long d'un axe longitudinal (9) du premier ressort (16), et **en ce que** le deuxième ressort (22) est disposé de telle manière, par rapport au premier ressort (16), que le deuxième ressort (22) superpose à une force de tension initiale du premier ressort (16) agissant sur le piston (8), une force de correction en vue de l'établissement préalable d'un point d'équilibre du régulateur de pression.

2. Dispositif suivant la revendication 1, **caractérisé en ce qu'**une mise en oeuvre est prévue dans le domaine d'un respirateur.

3. Dispositif suivant la revendication 1 ou 2, **caractérisé en ce qu'**une mise en oeuvre est prévue dans le domaine d'un instrument pour l'exécution d'une oxygénothérapie.

4. Dispositif suivant l'une des revendications 1 à 3, **caractérisé en ce que** le premier ressort (16) et le deuxième ressort (22) sont disposés coaxialement l'un par rapport à l'autre.

5. Dispositif suivant l'une des revendications 1 à 4, **caractérisé en ce que** le deuxième ressort (22) présente une constante de ressort plus réduite que celle du premier ressort (16).

6. Dispositif suivant l'une des revendications 1 à 5, **caractérisé en ce que** le deuxième ressort (22) se trouve relié à une installation de réglage en vue de l'établissement préalable d'une tension initiale.

7. Dispositif suivant l'une des revendications 1 à 6, **caractérisé en ce que** le deuxième ressort (22) est aménagé dans un espace intérieur (13) du piston (8).

8. Dispositif suivant l'une des revendications 1 à 7, **caractérisé en ce que** l'élément de réglage (24) est pourvu d'un capuchon (25) pouvant être actionné manuellement.

9. Dispositif suivant l'une des revendications 1 à 8, **caractérisé en ce que** le piston (8) est soumis par le premier ressort (16) et par le deuxième ressort (22) à un déploiement de forces dans des directions opposées l'une à l'autre.
